# EUROPÄISCHE PATENTSCHRIFT

(11) **EP 2 131 479 B1**
(45) Veröffentlichungstag und Bekanntmachung des Hinweises auf die Patenterteilung: **24.07.2013**
(21) Anmeldenummer: 08157566.4
(22) Anmeldetag: 04.06.2008
(51) Int. Cl.: H02M 1/32, H02M 3/335

(54) **Ausgangsstromregelung eines Schaltnetzteils**
Output current output control for a switched mode power supply
Régulation du courant de sortie d'un convertisseur de puissance

(43) Veröffentlichungstag der Anmeldung: 09.12.2009
(73) Patentinhaber: BLOCK Transformatoren-Elektronik GmbH, 27283 Verden (DE)
(72) Erfinder: Leipscher, Peter, 28816 Stuhr (DE)
(74) Vertreter: Eisenführ, Speiser & Partner

(56) Entgegenhaltungen:
- US-A1- 2004 210 349
- US-A1- 2005 018 457
- US-A1- 2006 262 463
- US-A1- 2008 019 153
- US-B1- 6 212 051
- US-B1- 6 329 727

## Beschreibung

Die vorliegende Erfindung betrifft eine Schaltungsanordnung zur Ansteuerung eines Schaltnetzteils zum Begrenzen einer Leistungsübertragung des Schaltnetzteils, insbesondere zum Begrenzen eines Ausgangsstromes des Schaltnetzteils. Weiterhin betrifft die vorliegende Erfindung ein Schaltnetzteil mit einer solchen Schaltungsanordnung und die Erfindung betrifft ein Verfahren zum Ansteuern eines solchen Schaltnetzteils.

Schaltnetzteile sind allgemein bekannt, sie verwenden einen Transformator zur Übertragung elektrischer Leistung von einer Primärseite auf eine Sekundärseite und eine Schalteinheit zum Schalten eines Ansteuerstroms zum Ansteuern des Transformators. Hierbei wird mittels der Schalteinheit an der Primärseite des Transformators ein getaktetes Signal bereitgestellt, das von dem Transformator übertragen wird und im Wesentlichen zu einem an der Sekundärseite des Transformators resultierenden Ausgangsstrom führt, der außerdem von der angeschlossenen Last abhängt. Aufgrund der Dimensionierung des Netzteils, insbesondere des Transformators ist nur ein begrenzter Ausgangsstrom zulässig und entsprechend ist nur eine begrenzte Leistung übertragbar. Wird dauerhaft ein höherer Strom übertragen als durch die Auslegung des Netzteils vorgegeben ist, so kann dies insbesondere aus thermischen Gründen das Schaltnetzteil schädigen.

Um einer solchen Schädigung vorzubeugen, ist es bekannt, den Ausgangsstrom zu erfassen und mit einem Schwellwert zu vergleichen. Durch den Schwellwert wird der zulässige Ausgangsstrom und somit eine Obergrenze bestimmt. Erkennt eine Vergleichseinheit, dass der erfasste Ausgangsstrom über dem vorgegebenen Grenzwert ist, so wird ein entsprechendes Begrenzungssignal an die Schalteinheit ausgegeben. Die Schalteinheit reduziert daraufhin beispielsweise über ihre Pulsbreite die übertragbare Leistung und damit den Ausgangsstrom des Schaltnetzteils. Sobald der erfasste Ausgangsstrom wieder unter dem vorgegebenen Grenzwert liegt, wird ein entsprechendes Signal an die Schalteinheit gegeben beziehungsweise das Strombegrenzungssignal wird nicht mehr an die Schalteinheit ausgegeben

Technisch bedingt treten jedoch Betriebszustände auf, die nur sehr kurzzeitig einen Überstrom benötigen. In solchen Betriebzuständen kann zwar die absolute Amplitude des Ausgangsstromes über der Auslegung des Schaltnetzteils liegen. gleichwohl würde ein solcher Strom aufgrund der kurzen Dauer das Schaltnetzteil nicht oder nicht wesentlich gefährden. Dies ist insbesondere dadurch bedingt, dass die zumeist thermisch bedingten Schäden erst durch einen länger andauernden Überstrom auftreten. Die oben beschriebenen Ausgangsstrombegrenzungen werden jedoch sofort wirksam und lassen daher auch einen nur kurzzeitigen Überstrom nicht zu. Für den oben beschriebenen Betriebszustand müsste somit entweder auf eine Strombegrenzung verzichtet werden oder das Schaltnetzteil müsste eine entsprechend höhere Dimensionierung haben, die auf die Amplitude auch der kurzzeitig nötigen Überströme ausgelegt ist.

Die Patentanmeldung US 2004/0210349 A1 betrifft ein Verfahren zum Steuern eines Netzteils mit einer Eingangsstufe zu dem Netzteil, wobei die Eingangsstufe mehrere Digital-AnalogSchaltkreise unter Kontrolle eines Controllers umfasst und der Controller programmiert wird, um die Digjtal-Analog-Schaltkreise zu steuern um nutzerbestimmte Ausgangsreferenzspannung und nutzerbestimmte Überspannungsschutzreferenzspannungen an das Netzteil zu übersenden.

Das Patent US 6,212,051 B1 betrifft einen pulsbreiten modulierten Strombegrenzer, der einen Vergleicher für Störungen aufweist, der den Pulsbreitenmodulator außer Kraft setzt, wenn ein Überlastfehlerzustand erfasst wird.

Das Patent US 6,329,727 B1 betrifft einen Netzteilcontroller, der ein digitales Signal in Antwort auf Eingangsdaten wie Temperatur und/oder Lüftergeschwindigkeit erzeugt. Das Digitalsignal wird in ein Analogsignal gewandelt, das zum Steuern einer variablen Leistungsversorgung verwendet wird.

Die Anmeldung US 2008/0019153 A1 betrifft eine Schutzvorrichtung für einen Umrichter und ein zugehöriges Verfahren. Demnach beinhaltet eine Schutzvorrichtung für einen Umrichter wenigstens einen Leistungsschalter, der für eine erste Zeitperiode arbeitet, von der Zeit, zu der die Überlast oder der Kurzschluss in dem Umrichter detektiert wurde.

Aufgabe der vorliegenden Erfindung ist es somit, die oben genannten Nachteile möglichst zu überwinden und insbesondere eine Lösung bereitzustellen, die trotz kurzzeitiger Überströme eine möglichst kleine Dimensionierung des Schaltnetzteils ermöglicht.

Erfindungsgemäß wird somit eine Schaltungsanordnung zur Ansteuerung eines Schaltnetzteils zum Begrenzen einer Leistungsübertragung des Schaltnetzteils, insbesondere zum Begrenzen eines Laststromes des Schaltnetzteils gemäß Anspruch 1 vorgeschlagen. Das Schaltnetzteil, das mittels der Schaltungsanordnung anzusteuern ist, weist einen Transformator zur Übertragung elektrischer Leistung von einer Primärseite auf eine Sekundärseite auf. Außerdem weist das Schaltnetzteil eine Schalteinheit zum Schalten eines Ansteuerstroms zur Ansteuerung des Transformators auf. Diese Schalteinheit steuert somit ein getaktetes Signal auf der Primärseite des Transformators. Entsprechend stellt sich an der Sekundärseite des Transformators ein durch eine Last fließender Laststrom ein.

Der durch die Last fließende Laststrom wird durch eine Lastmesseinheit erfasst. Die Lastmesseinheit misst dabei eine zu dem Laststrom proportionale Lastmessgröße. Beispielsweise wird ein Messwiderstand angeordnet, durch den der Laststrom fließt und an dem eine zum Strom proportionale Spannung abfällt, die von der Lastmesseinheit gemessen wird. Wenn ein Anschlusspunkt des Messwiderstandes geerdet ist oder mit einem ähnlichen Bezugspotential verbunden ist, kann es ausreichend sein als Lastmessgröße das Spannungspotential an dem zweiten Anschlusspunkt des Messwiderstandes auszuwerten beziehungsweise zu verwerten.

Weiterhin ist eine Schwellwerteinheit mit einem Messeingang zum Eingeben der Lastmessgröße vorhanden. An diesen Messeingang wird die zum Laststrom proportionale Lastmessgröße eingegeben. Gemäß einer Ausführung wird hierbei der Anschlusspunkt des oben beschriebenen Messwiderstandes, der ein Spannungspotential führt, mit diesem Messeingang verbunden. Das Potential am Messeingang bildet dann den Eingang der Schwellwerteinheit. Ebenso kommen andere Ausführungen in Betracht, bei denen beispielsweise keine direkte Verbindung zwischen Messwiderstand und Schwellwerteinheit besteht sondern noch eine Abschaltungsanordnung zwischengeschaltet ist.

Weiterhin weist die Schwellwerteinheit einen Referenzeingang auf, an dem eine zu einem Schwellwert korrespondierende Referenzgröße eingegeben wird. Bei Verwendung einer Messspannung als zu dem Laststrom proportionalen Lastmessgröße wird bevorzugt auch eine Referenzspannung als zu dem Schwellwert korrespondierende Referenzgröße eingegeben. Ein Vergleich zwischen diesen beiden Spannungen ist somit auf einfache Weise möglich. Jedenfalls prüft die Schwellwerteinheit unter Berücksichtigung der Größen am Messeingang und am Referenzeingang, ob die gemessene Lastmessgröße den Schwellwert überschreitet. Wenn dies der Fall ist, so wird an einem Begrenzungssignalausgang ein Begrenzungssignal ausgegeben. Dieses Begrenzungssignal wird dann an die Schalteinheit weitergegeben, so dass diese ihre Ansteuerung der Primärseite des Transformators ändert, um so einen zu hohen Laststrom an der Sekundärseite des Transformators zu verhindern. Die Schalteinheit setzt somit die durch das Begrenzungssignal vorgegebene Begrenzung im Wesentlichen um.

Erfindungsgemäß ist die Referenzgröße am Referenzeingang der Schwellwerteinheit jedoch nicht konstant sondern kann durch eine Referenzveränderungseinheit verändert werden. Die Referenzveränderungseinheit weist hierzu ein Veränderungsmittel auf, das die Veränderung der Referenzgröße bewirkt, und eine Steuereinheit, die hierzu das Veränderungsmittel ansteuert. Im Rahmen der Möglichkeiten des Veränderungsmittels und der Steuereinheit kann somit die Referenzgröße im Wesentlichen beliebig und damit auch an den jeweiligen Anwendungsfall angepasst verändert werden. Insbesondere ist auch eine zeitweise und auch kurzzeitige Änderung der Referenzgröße erreichbar. Durch das Verändern der Referenzgröße wird im Grunde die Entscheidungs- beziehungsweise Prüfungsgrundlage der Schwellwerteinheit verändert. Um beispielsweise einen kurzzeitig erhöhten Laststrom zuzulassen, braucht nur die Referenzgröße entsprechend kurzzeitig erhöht zu werden. Ein Überstrom, der aber unter einem der geänderten Referenzgröße entsprechenden Schwellwert liegt, wird somit von der Schwellwerteinheit nicht als Überstrom erkannt, solange die entsprechende Erhöhung der Referenzgröße vorliegt und entsprechend an dem Referenzeingang der Schwellwerteinheit anliegt. Nach Ablauf einer vorbestimmten Zeit kann die Referenzgröße wieder abgesenkt werden.

Somit ist durch die erfindungsgemäße Schaltungsanordnung unter anderem eine Laststrombegrenzung realisierbar, die kurzzeitig einen Überstrom zulässt, ohne dass eine Anpassung der Schwellwerteinheit hierzu notwendig wäre.

Dies ist jedoch nur ein Beispiel und verschiedene andere Möglichkeiten zur Veränderung der Referenzgröße und damit zur Einflussnahme auf das von der Schwellwerteinheit ausgegebene Begrenzungssignal sind erreichbar. Dies schließt auch eine Absenkung der Referenzgröße und damit eine Verringerung des zulässigen Laststroms sowohl kurzzeitig als auch für einen längeren Zeitraum ein.

Gemäß einer Ausführungsform ist der Referenzeingang über einen Referenzwiderstand mit einem Referenzspannungspotential verbunden. Außerdem ist der Referenzeingang hierbei über wenigstens einen Teilerwiderstand mit der Referenzveränderungseinheit verbunden. Der Referenzwiderstand und der wenigstens eine Teilerwiderstand bilden somit einen Spannungsteiler, wobei zwischen beiden Widerständen der Referenzeingang angeschlossen ist und seine Spannung somit von dem Widerstandsverhältnis des Spannungsteilers abhängt. Die Referenzveränderungseinheit und insbesondere deren Veränderungsmittel kann dabei auf den Teilerwiderstand eingreifen, das Teilerverhältnis verändern und dadurch eine Änderung der Referenzgröße, insbesondere der Referenzspannung auf einfache Weise erreichen.

Eine Ausgestaltung schlägt vor, dass hierbei wenigstens zwei Teilerwiderstände und wenigstens zwei Schaltmittel vorgesehen sind, um die Schaltung der Widerstände zu verändern, um dadurch wiederum den für den Spannungsteiler wirksamen Gesamtteilerwiderstandswert der Teilerwiderstände zu verändern. Somit ist durch einfaches Schalten der Schaltmittel eine Veränderung der Referenzgröße, insbesondere Referenzspannung erreichbar. Durch erneutes Schalten eines oder mehrerer der Schaltmittel ist auf einfache Weise eine weitere Veränderung der Referenzgröße sowie noch weitere Veränderungen der Referenzgröße möglich. Durch die Verwendung von Schaltmitteln und in ihrem Widerstandswert im wesentlichen unveränderlichen Teilerwiderständen ist neben einer einfachen Veränderung zudem auch eine sehr gute insbesondere sehr genaue Wiederholbarkeit der Veränderung erzielbar.

Durch entsprechende Auswahl der Teilerwiderstände im Bezug auf ihre Widerstandswerte kann somit durch wenige Teilerwiderstände und entsprechend wenige zugeordnete Schaltmittel eine Vielzahl an Variationsmöglichkeiten erreicht werden. Im Idealfall können 2^{k} Möglichkeiten geschaffen werden, wenn k die Anzahl der Teilerwiderstände ist. Somit können beispielsweise bei der Verwendung von 10 Teilerwiderständen etwa 1000 Möglichkeiten eingestellt werden, die allesamt im Wesentlichen vorher bekannt sind.

Eine Ausführungsform schlägt vor, dass die Teilerwiderstände parallel zueinander angeordnet sind und zu jedem Teilerwiderstand ein Schaltmittel vorgesehen ist zum wahlweisen Verbinden des jeweiligen Widerstandes mit einem gemeinsamen Bezugspotential. Durch das Schließen eines oder mehrerer der Schaltmittel werden somit die betreffenden Teilerwiderstände zueinander parallel geschaltet, um dadurch den wirksamen Gesamtteilerwiderstand einzustellen. Hierbei ist der Spannungsteiler zwischen dem Referenzspannungspotential und dem für die Teilerwiderstände gemeinsamen Bezugspotential verschaltet. Die Differenzspannung zwischen dem Referenzspannungspotential und dem Bezugspotential wird somit dem Teilungsverhältnis entsprechend an dem Referenzeingang der Schwellwerteinheit aufgeteilt. Der wirksame Gesamtteilerwiderstandswert ergibt sich somit aus der Parallelschaltung der Teilerwiderstände, dessen Schaltmittel geschlossen ist, so dass die betreffenden Teilerwiderstände an dem gemeinsamen Bezugspotential verbunden sind.

Alternativ kann vorgesehen sein, dass die Teilerwiderstände in Reihe zueinander angeordnet sind und jedem Teilerwiderstand ein Schaltmittel parallel geschaltet ist, zum wahlweisen Überbrücken des betreffenden Teilerwiderstandes, um dadurch den wirksamen Gesamtteilerwiderstandswert der Reihenschaltung einzustellen. Der wirksame Gesamtteilerwiderstandswert ergibt sich somit aus der Summe der Widerstandswerte der Teilerwiderstände, dessen parallel geschaltetes Schaltmittel geöffnet ist. Hierbei kann ein Punkt der Reihe an dem Bezugspotential angeschlossen sein. Bei Verwendung dieser Reihenschaltung kann gemäß einer Ausführung vorgesehen sein, einen Widerstand in Reihe zu schalten, der kein parallel geschaltetes Schaltmittel aufweist, um eine unmittelbare Verbindung zwischen Referenzeingang und Bezugspotential zu verhindern.

Natürlich kommt auch eine Kombination aus Parallel- und Reihenschaltung verschiedener Teilerwiderstände in Betracht.

Gemäß einer bevorzugten Ausführungsform wird vorgeschlagen, dass die Referenzveränderungseinheit einen Steuersignaleingang aufweist zum Eingeben eines Steuersignals und das die Referenzveränderungseinheit dazu vorbereitet ist, abhängig von dem Steuersignal die Referenzgröße für wenigstens eine erste vorbestimmte Zeit auf einen ersten vorbestimmten Wert zu ändern. Somit ist die Referenzgröße durch ein bezogen auf die Referenzveränderungseinheit externes Signal veränderbar. Entsprechend lässt sich durch eben dieses externe Signal der Wert für die Strombegrenzung des Laststroms vorübergehend ändern. Durch die Vorgabe der ersten vorbestimmten Zeit soll dabei sichergestellt werden, dass eine zeitlich begrenzte Stromüberhöhung zugelassen wird, um durch die zeitliche Begrenzung eine Überlastung zu verhindern. Dabei ist es sinnvoll, ausgehend von der Auslegung des Schaltnetzteils die erlaubte Laststromerhöhung auf die erste vorbestimmte Zeit abzustimmen.

Vorzugsweise ist die Referenzveränderungseinheit dazu vorbereitet, nach Ablauf der ersten vorbestimmten Zeit die Referenzgröße dem Betrag nach für wenigstens eine weitere vorbestimmte Zeit auf einen weiteren vorbestimmten Wert zu ändern. Hierdurch könnten beispielsweise für eine erste kurze Zeit eine starke Erhöhung und damit ein großer Laststrom zugelassen werden und im Anschluss daran eine kleine Erhöhung gegebenenfalls für eine längere Zeit zuzulassen. Wesentlich ist, dass bei dieser Ausgestaltung verschiedene Änderungen der Referenzgröße unter Verwendung verschiedener Zeitabschnitte realisierbar sind, um eine möglichst hohe Vielfalt und somit entsprechenden Spielraum für den Fachmann zur Anwendung zu schaffen. Das beschriebene kurzseitige Zulassen von Überhöhungen des Laststromes ist im Grunde nur eine Anwendungsmöglichkeit der erfindungsgemäßen Schaltungsanordnung. Ebenso kommt eine gezielte Begrenzung auf einen niedrigeren Wert oder beispielsweise auch ein gezielter Wechsel zwischen zugelassener Überhöhung und reduziertem Maximalwert für den Laststrom in Betracht. Erfindungsgemäß wird eine Schaltungsanordnung vorgeschlagen, die eine solche flexible Handhabung auf einfache Weise ermöglicht. Dabei sind die durchführbaren und insbesondere die beschriebenen Anwendungen der Schaltungsanordnung ebenfalls als ein Aspekt der Erfindung anzusehen.

Neben einer zweiten Änderung der Referenzgröße für eine zweite vorbestimmte Zeit kommen im Grunde beliebig viele weitere Änderungen zu weiteren vorbestimmten Zeiten in Betracht.

Gemäß einer noch weiteren Ausgestaltung ist der Begrenzungssignalausgang mit dem Steuersignaleingang verbunden, um das Begrenzungssignal als Steuersignal zu verwenden. Auf diese Art und Weise wird beispielsweise in einfacher und gleichzeitig effizienter Art und Weise eine zeitlich begrenzte Laststromüberhöhung ermöglicht. Durch die Verwendung des Begrenzungssignals als Steuersignal kann ein bereits vorhandenes Signal im Grunde als Startsignal verwendet werden. Hierbei wird durch die Auswertung des Begrenzungssignals erkannt, wenn der Laststrom einen ersten Wert wie beispielsweise den maximalen Stromwert für Dauerbelastung überschritten hat. Entsprechend ergibt sich ein Überlastungssignal, das ebenfalls an die Referenzveränderungseinheit eingegeben wird, um die Referenzgröße kurzzeitig zu erhöhen. Durch Erhöhen der Referenzgröße würde zwar die Schellwerteinheit als Folge wohl keine Laststromüberhöhung mehr erkennen und entsprechend auch das Begrenzungssignal wieder zurücknehmen, gleichwohl würde die kurzzeitige Erhöhung der Referenzgröße in diesem geschilderten Beispiel beibehalten werden, wenn das Begrenzungssignal für die Referenzveränderungseinheit nur ein Startsignal darstellt.

Eine Ausgestaltung schlägt vor, dass die Schaltungsanordnung dadurch gekennzeichnet ist, dass die Steuereinheit programmierbar ist, insbesondere einen Mikroprozessor aufweist und/oder ein vorgegebenes Programm aufweist um die Referenzgröße gemäß einer durch das Programm vorgegebenen Kennlinie zu ändern. Demnach können unterschiedliche Referenzgrößen zu unterschiedlichen Zeitdauern im Sinne einer Kennlinie vorgegeben werden. Hierfür kann die Schaltungsanordnung bereits ein entsprechendes Programm aufweisen oder ein solches Programm kann in der Schaltungsanordnung hinterlegt werden oder dort programmiert werden. Vorzugsweise weist die Schaltungsanordnung hierfür einen Mikroprozessor oder Mikrocontroller oder dergleichen auf. Es ist hierdurch auf einfache und gleichwohl komplexe Weise für eine Laststrombegrenzung eine Kennlinie allein durch entsprechende Änderung der Referenzgröße vorgebbar.

Eine weitere Ausgestaltung schlägt vor, dass die Referenzveränderungseinheit dazu vorbereitet ist, nach einem Verändern der Referenzgröße für eine vorbestimmte Erholungszeit ein erneutes Verändern zu verhindern. Hierdurch wird verhindert, dass kurzzeitige Laststromerhöhungen in einer so dichten Folge zugelassen werden könnten, dass sich durch diese dichte Abfolge eine das Netzteil schädigende Belastung ergibt. Durch das Vorsehen einer solchen Erholungszeit wird insbesondere einer thermischen Überlastung vorgebeugt, da die umgesetzte Energie bei einer kurzzeitigen Stromüberhöhung in der vorbestimmten Erholungszeit im Wesentlichen wieder abgeführt werden kann. Eine solche Erholungszeit kann beispielsweise dadurch erreicht werden, dass sich an eine erste Zeitdauer mit einer Laststromerhöhung eine weitere - insbesondere längere - zweite Zeit mit einem entsprechenden zugehörigen geringen Laststromgrenzwert anschließt.

Gemäß einer Ausgestaltung wird ein Schaltnetzteil mit einer erfindungsgemäßen Schaltungsanordnung vorgeschlagen. Hierbei ist das Schaltnetzteil und die Schaltungsanordnung aufeinander angepasst auszugestalten. Hierdurch kann ein Schaltnetzteil geschaffen werden, das eine geringe Dimensionierung aufweist und gleichzeitig auf einfache Weise einen kurzzeitigen Überstrom an der Lastseite zulässt, der über dem Maximalwert für einen dauerhaften Laststrom liegen kann. Aber auch andere Kennlinien als Vorgabe für eine Strombegrenzung können fest vorgegeben und an das Schaltnetzteil angepasst sein.

Erfindungsgemäß wird außerdem ein Verfahren zum Ansteuern eines Schaltnetzteils zum Begrenzen einer Leistungsübertragung des Schaltnetzteils gemäß Anspruch 12 vorgeschlagen. Vorzugsweise wird das Verfahren unter Verwendung einer erfindungsgemäßen Schaltungsanordnung durchgeführt. Grundsätzlich weist dabei das Schaltnetzteil einen Transformator zur Übertragung elektrischer Leistung von einer Primär- auf eine Sekundärseite und eine Schalteinheit zum Schalten eines Stroms zur Ansteuerung eines Transformators auf. Bei dem Verfahren wird eine Lastmessgröße gemessen, die zu einem durch eine Last auf der Sekundärseite fließenden Laststrom korrespondiert, insbesondere proportionale ist. Natürlich kann die Proportionalität auch geringe Nichtlinearitäten aufweisen. Weiterhin wird geprüft, ob die Lastmessgröße einen durch eine Referenzgröße vorgegebenen Schwellwert übersteigt. Dies bedeutet im Grunde, dass die gemessene Lastmessgröße mit der Referenzgröße verglichen wird. Wenn die Lastmessgröße den vorgegebenen Schwellwert übersteigt, wird ein entsprechendes Überlastsignal an die Schalteinheit gegeben und diese kann auf das Empfangen dieses Überlastsignals hin die Ansteuerung der Primärseite ändern, um hierdurch den Laststrom zu begrenzen bzw. zu verringern. Schließlich wird die Referenzgröße für wenigstens eine vorbestimmte Zeit auf wenigstens einen geänderten Referenzgrößenwert verändert. Hierdurch wird die Voraussetzung für die Prüfung, ob die Lastmessgröße einen vorgegebenen Schwellwert übersteigt beeinflusst werden. In einem Fall erfolgt zeitlich unmittelbar nach dem ersten Erkennen eines Übersteigens des Schwellwertes eine Veränderung der Referenzgröße so, dass unmittelbar danach trotz weiterhin hohen Laststroms eine Übersteigung des Schwellwertes nicht mehr erkannt wird. In diesem Fall hat eine Reduzierung des Laststroms praktisch noch gar nicht stattgefunden, weil die Referenzgröße nach Auftreten des Überstroms sofort verändert wurde, um einen Überstrom kurzfristig und kurzzeitig zuzulassen.

Günstig ist es, wenn das Verändern der Referenzgröße durch das Überlastsignal ausgelöst wird. Das Überlastsignal wird somit zum Erlauben einer kurzen Veränderung des Wertes der Referenzgröße zum Ermöglichen eines kurzen Überstroms als Startsignal verwendet. Wird beispielsweise hierdurch eine Erhöhung der Referenzgröße und damit ein kurzzeitiger Überstrom zugelassen, so resultiert hieraus auch, dass das Überlastsignal seinen Wert wieder ändert bzw. ausbleibt. Der für einen kurzen Zeitraum zugelassene Überstrom bleibt aber zugelassen, da das Überlastsignal nur als Startsignal verwendet wurde.

Gemäß einer bevorzugten Ausgestaltung werden zum Verändern der Referenzgröße Widerstände eines bzw. des Spannungsteilers somit als Schaltmittel geschaltet, dass sich das Teilungsverhältnis des Spannungsteilers ändert. Somit brauchen lediglich Schaltmittel bzw. nur ein einziges Schaltmittel geschaltet zu werden, um dadurch einen Gesamtwiderstand zu ändern, um dadurch das Teilungsverhältnis des Spannungsteilers und die entsprechende resultierende Spannung zu ändern, die die Referenzgröße bildet.

Gemäß einer weiteren Ausführungsform wird vorgeschlagen, dass die Referenzgröße zeitlich aufeinander folgend mehrfach geändert wird, um dadurch eine geänderte Referenzgröße zu erzeugen, die im Wesentlichen eine Referenzkennlinie bildet. Aufgrund der Referenzkennlinie ergibt sich somit eine Kennlinie für den Schellwert und eine Strombegrenzung ist - abhängig von den verwendeten Geräten - im Grunde beliebig vorgebbar. Dabei braucht an dem Mittel, das den Wert des Laststroms überprüft keinerlei Änderung vorgenommen zu werden und die vorgeschlagene Lösung schafft somit ein besonders einfaches Verfahren.

Wenn gemäß einer Ausführungsform die Veränderung der Referenzgrößen und/oder die nötigen Änderungsschritte vorprogrammiert sind, insbesondere als Daten in einem Datenspeicher in einer bzw. der Referenzänderungseinheit gespeichert sind, kann eine mitunter komplexe Begrenzungskennlinie gleichwohl auf einfache Weise erreicht werden. Allein durch Eingeben eines Steuersignals wie beispielsweise des Begrenzungssignals kann das Vorgeben einer komplexen Kennlinie - oder auch einer einfacheren Begrenzung - erfolgen. Das Steuersignal kann hierbei als Startsignal dienen und die weitere Vorgabe der Kennlinie bestimmt sich dann allein durch die Vorprogrammierung beziehungsweise gespeicherten Daten. Natürlich kommen auch komplexere Steuersignale als nur ein Startsignal in Betracht. So können beispielsweise unterschiedliche Steuersignale zu der Auswahl unterschiedlicher Kennlinien führen. Durch unterschiedliche Steuersignale werden dann so unterschiedliche Kennlinien ausgelöst, für die das jeweils betreffende Steuersignal die Startgröße ist. Ebenso kommt eine gezielte Änderung der Referenzgröße wie beispielsweise eine unmittelbare Steuerung der Referenzgröße durch das Steuersignal in Betracht. Dies sind nur einige Beispiele für mögliche Steuersignale und deren Wirkung.

Nachfolgend wird nun die vorliegende Erfindung anhand eines Beispiels unter Bezugnahme auf die begleitenden Figuren beschrieben.
- Figur 1: zeigt eine erfindungsgemäße Schaltungsanordnung zusammen mit Teilen eines Schaltnetzteils und
- Figur 2: zeigt ein Schaltnetzteil mit einer erfindungsgemäßen Schaltungs-anordnung gemäß einer weiteren Ausführungsform.

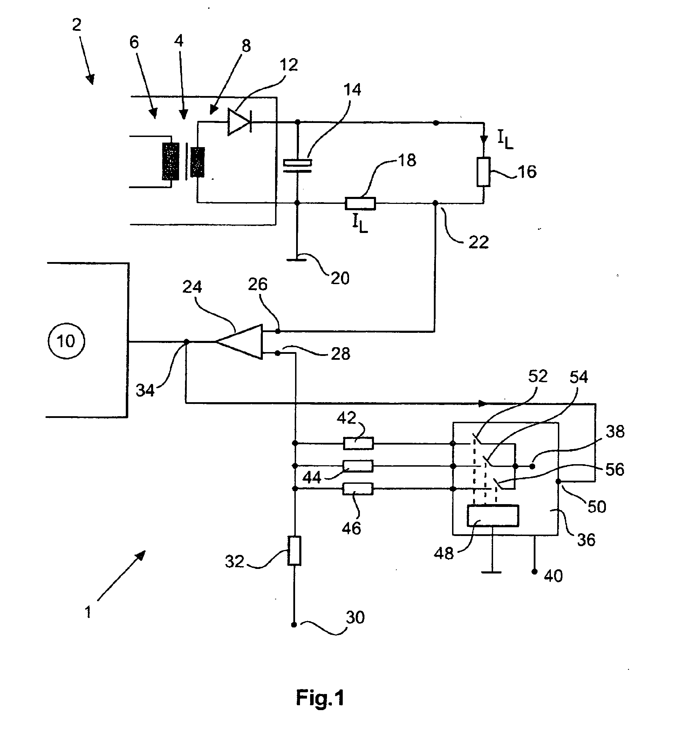

Die Schaltungsanordnung 1 der Figur 1 ist mit einem Schaltnetzteil 2 verbunden, das aber nur teilweise dargestellt ist, da es nicht auf alle Komponenten des Schaltnetzteils ankommt. Die grundsätzliche Funktionsweise eines Schaltnetzteils ist dem Fachmann bekannt. Dabei weist das Schaltnetzteil einen Transformator 4 mit einer Primärseite 6 und einer Sekundärseite 8 auf. Die Schalteinheit 10 gibt ein Schaltsignal zur Ansteuerung der Primärseite 6 vor. Abhängig davon resultiert an der Sekundärseite 8 ein Ausgangsstrom durch die Diode 12. Hierdurch wird der Kondensator 14 insbesondere zum Glätten geladen und ein Laststrom I_{L} fließt durch die Last 16 und im Wesentlichen auch durch den Messwiderstand 18. Der Messwiderstand 18 ist mit einem ersten Anschlusspunkt mit einem Erdungspotential 20 verbunden. Aufgrund des Laststromes I_{L} durch den Messwiderstand 18 fällt somit eine Spannung über dem Messwiderstand 18 ab, die an dem Spannungsmesspunkt 22 gegenüber dem Erdungspotential 20 gemessen werden kann.

Die Spannung am Spannungsmesspunkt 22 ist somit eine zum Laststrom I_{L} korrespondierende Lastmessgröße, wobei diese im Wesentlichen proportional zum Laststrom I_{L} ist, Diese Lastmessgröße wird an der Schwellwerteinheit 24 an dem Messeingang 26 eingegeben. An dem Messeingang 26 der Schwellwerteinheit 24 liegt somit eine zum Laststrom I_{L} proportionale Spannung an. Im vorliegenden Fall ist die Schwellwerteinheit 24 ein Operationsverstärker, der einen nahezu unendlichen Innenwiderstand aufweist, so dass die Spannung an dem Spannungsmesspunkt 22 und damit an dem Messeingang 26 im Grunde zu keinem nennenswerten Strom in die Schwellwerteinheit 24 führt. Somit wirkt sich die Verschaltung mit der Schwellwerteinheit 24 nicht oder nur unwesentlich auf den Laststrom I_{L} aus.

Die Schwellwerteinheit 24 weist zudem einen Referenzeingang 28 auf, an den eine zu einem Schwellwert korrespondierende Referenzgröße, gemäß Figur 1 nämlich eine Referenzspannung eingegeben wird. Die Referenzspannung wird im Grunde durch das Referenzspannungspotential 30 vorgegeben das beispielsweise 4 V betragen kann. Zwischen dem Referenzspannungspotential 30 und dem Referenzeingang 28 ist ein Referenzwiderstand 32 angeordnet. Soweit zwischen dem Referenzspannungspotential 30 und dem Referenzeingang 28 nur der Referenzwiderstand 32 wirksam ist, wird am Referenzeingang 28 im Wesentlichen die Spannung des Referenzspannungspotentials 30 anliegen, weil der Referenzwiderstand 32 von seinem Wert her gegenüber dem Idealerweise unendlichen Innenwiderstand der Schwellwerteinheit 24 vernachlässigbar.

Die Schwellwerteinheit 24 überprüft somit durch Vergleich, ob die Messspannung am Messeingang 26 den Wert der Referenzspannung an dem Referenzeingang 28 überschreitet. Wenn dies der Fall ist, wird über den Begrenzungssignalausgang 34 ein Begrenzungssignal an die Schalteinheit 10 ausgegeben.

Das Erkennen eines Überstroms und somit das Kriterium zum Ausgeben eines Begrenzungssignals hängt somit von der Spannung an dem Referenzeingang 18 ab. Um das Begrenzungssignal am Begrenzungssignalausgang 34 zu beeinflussen ist eine Referenzveränderungseinheit 36 zum Verändern des Referenzsignals am Referenzeingang 28 vorgesehen. Die Referenzveränderungseinheit 36 ist im Wesentlichen schematisch, funktionell veranschaulicht dargestellt. Die Veränderung des Spannungssignals und damit der Referenzgröße am Referenzeingang 28 erfolgt im Wesentlichen mithilfe der drei Teilerwiderstände 42, 44 und 46 und mit den zugehörigen Schaltmitteln 52, 54 und 56, die mit einem gemeinsamen Bezugspotential 38 verbunden sind. An dem Bezugspotential 38 kann beispielsweise eine konstante Spannung von +5 Volt bereitgestellt werden, die ebenfalls an einem Versorgungseingang 40 der Referenzveränderungseinheit 36 zugeführt wird. Die Figur zeigt exemplarisch drei Widerstände 42, 44 und 46 in einer bestimmten Verschaltung. Dies ist nur eine Ausgestaltung die zur exemplarischen Erklärung herangezogen wird. Sowohl Anzahl als auch Verschaltung kann in großem Maße von dem gezeigten Beispiel abweichen.

Die Widerstände 42, 44 und 46 sind an die Referenzveränderungseinheit 36 angeschlossen, um zu dem jeweils zugeordneten Schaltmittel 52, 54 und 56 geführt zu werden. Die Figur 1 ist nicht so zu verstehen, dass die drei Widerstände 42, 44 und 46 an der einen Seite der Referenzveränderungseinheit elektrisch verbunden sind, sondern dort sollen die Anschlüsse nur in die Referenzveränderungseinheit 36 geführt werden.

Jeder der Schaltmittel 52, 54 und 56 ist durch eine Steuereinheit 48 einzeln ansteuerbar. Gemäß der Darstellung der Figur 1 sind die Schaltmittel 52, 54 und 56, die im Übrigen als Veränderungsmittel zu verstehen sind, geöffnet dargestellt. Die drei Teilerwiderstände 42, 44 und 46 sind gemäß der Darstellung somit wirkungslos und beeinflussen die Spannung am Referenzeingang 28 in diesem Zustand nicht. Um die Spannung an dem Referenzeingang 28, zu verändern, kann eines oder mehrere der Schaltmittel 52, 54 und 56 geschlossen werden, um hierdurch zwischen dem Referenzspannungspotential 30 und dem Bezugspotential 38 einen Spannungsteiler zu schaffen. Dieser Spannungsteiler besteht somit aus dem Referenzwiderstand 32 einerseits und einem der Teilerwiderstände 42, 44 oder 46, oder einer Parallelschaltung aus zweien oder allen dieser Teilerwiderstände andererseits. Die Spannung zwischen dem Referenzwiderstand 32 und den Teilerwiderständen 42, 44 und 46 bestimmt sich somit durch das Teilerverhältnis dieses Widerstandsteilers und die Gesamtspannung zwischen dem Referenzspannungspotential 30 und dem Bezugspotential 38. Dabei kann der Gesamtwiderstandswert der jeweils wirksamen Teilerwiderstände 42, 44 und 46 durch entsprechendes Schließen oder Öffnen der Schaltmittel 52, 54 und 56 auf einfache Weise eingestellt werden. Dabei sind, sofern die Widerstände 42, 44 und 46 geeignet unterschiedliche Werte aufweisen, 2³ und damit acht unterschiedliche Werte - einschließlich der Möglichkeit, dass alle drei Widerstände unwirksam sind bzw. den Wert unendlich annehmen - einstellbar. Entsprechend ergäben sich bei beispielsweise zehn Widerständen bis zu 1024 Möglichkeiten. Hierzu brauchen nur die jeweiligen Schaltmittel 52, 54 und 56 durch die Steuereinheit 48 separat angesteuert zu werden. Die Steuereinheit 48 kann hierzu einen Mikroprozessor zum Auswählen oder Durchführen der Schalthandlungen aufweisen. Gewünschte Werte oder gewünschte Verhalten können in einem entsprechenden Speicherchip oder ähnlichem Datenspeicher in der Steuereinheit 48 vorbereitet sein.

Mit dem Schaltnetzteil 2 und der Schaltungsanordnung 1 gemäß Figur 1 ist beispielsweise auf folgende Weise ein kurzzeitiger Überstrom realisierbar.

Zunächst führt ein entsprechender Betriebszustand, der durch die Last 16 bedingt ist, zu einem steigenden Laststrom I_{L}. Dieser Laststrom I_{L} führt aufgrund des Messwiderstandes 18 zu einer erhöhten Spannung an dem Spannungsmesspunkt 22 und damit an dem Messeingang 26. Die Spannung im Messeingang 26 steigt dabei über die Spannung am Referenzeingang 28 und die Schwellwerteinheit 24 gibt ein Begrenzungssignal am Begrenzungssignalausgang 34 aus und grundsätzlich auch an die Schalteinheit 10. Gleichzeitig wird das Strombegrenzungssignal aber auch von dem Begrenzungssignalausgang 34 an den Steuersignaleingang 50 der Referenzveränderungseinheit 36 eingegeben.

Durch das Anlegen des Begrenzungssignals an den Steuersignaleingang 50 der Referenzveränderungseinheit 36 wird die Steuereinheit 48 dazu veranlasst, in einem Beispiel für einen kurzen Zeitraum sämtliche Schaltmittel 52, 54 und 56 zu schließen. Durch dieses Schließen aller Schaltmittel 52, 54 und 56 werden alle Teilerwiderstände 42, 44 und 46 parallel geschaltet, um dadurch den kleinstmöglichen Gesamtteilerwiderstand zu bilden. Somit wird möglichst wenig Spannung an den parallel geschalteten Teilerwiderständen 42, 44 und 46 abfallen, wodurch der Spannungswert an dem Referenzeingang 28 zum Bezugspotential 38 der Referenzveränderungseinheit 36 verschoben wird.

Die Spannung an dem Referenzeingang 28 steigt somit und die Schwellwerteinheit 24 gibt kein Begrenzungssignal mehr aus, es sei denn die Spannung an dem Spannungsmesspunkt 22 steigt auch auf den veränderten Wert der Referenzspannung an dem Referenzeingang 28 an.

Obwohl nun auch die Referenzveränderungseinheit 36 an ihrem Steuersignaleingang 50 kein Strombegrenzungssignal mehr erhält, bleiben - für dieses Beispiel - die Schaltmittel 52, 54 und 56 für die vorbestimmte Zeit geschlossen. Entsprechend kann für diese vorbestimmte Zeit der Laststrom I_{L} so groß werden, dass die Spannung an dem Spannungsmesspunkt 22 den Wert der nun erhöhten Referenzspannung an dem Referenzeingang 28 annimmt. Zur Verhinderung einer Überlastung wird nach Ablauf der vorbestimmten Zeitdauer zumindest einer der Schalter 52, 54 und 56 wieder geöffnet, um somit den Gesamtwiderstandswert der jeweils wirksamen Teilerwiderstände 42, 44 und 46 zu erhöhen, um in dem geschilderten Beispiel die Referenzspannung an dem Referenzeingang 28 zu verringern und damit auch die Strombegrenzung auf einen geringeren zulässigen Laststrom zu verringern.

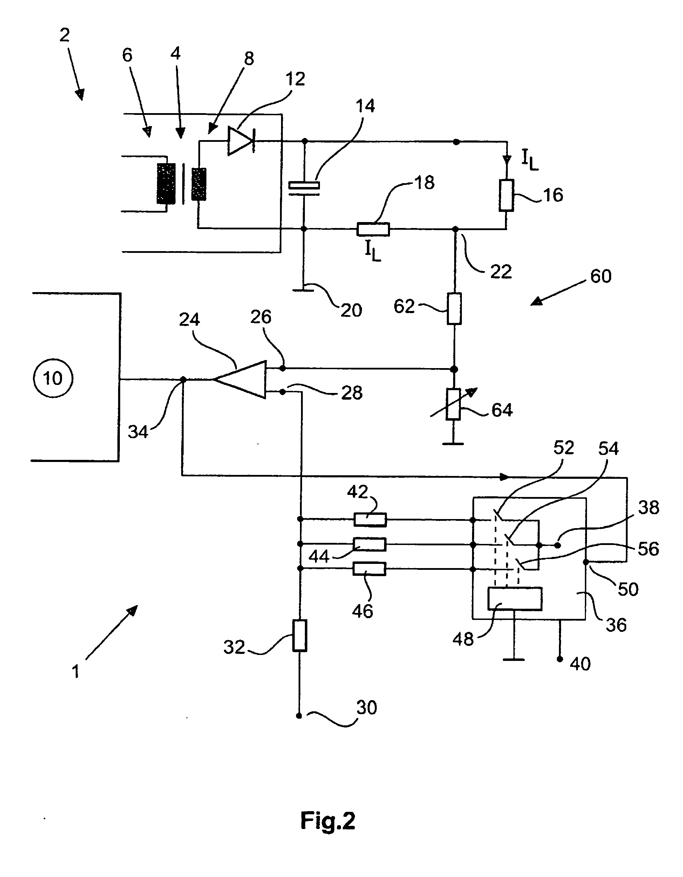

Figur 2 zeigt im Wesentlichen eine Schaltungsanordnung 1 mit Netzteil 2 gemäß der Figur 1. Zusätzlich ist der Messeingang 26 unter Verwendung eines Messspannungsteilers 60 mit dem Spannungsmesspunkt 22 verbunden. Der Messteiler 60 weist dabei einen ersten Messteilerwiderstand 62 und einen einstellbaren zweiten Messteilerwiderstand 64 auf. Über den einstellbaren zweiten Messteilerwiderstand 64 ist eine Einstellung der für den Messeingang 26 relevanten Spannungsmessung an dem Spannungsmesspunkt 22 erzielbar, um beispielsweise die Schaltung jedenfalls für diesen Teilbereich abzugleichen.

Die vorliegende Erfindung schafft somit auf einfache Weise eine Schaltungsanordnung für eine flexible Strombegrenzung.

## Patentansprüche

1. Schaltungsanordnung (1) zur Ansteuerung eines Schaltnetzteils (2), zum Begrenzen eines Laststromes (I_{L}) des Schaltnetzteils (2), wobei das Schaltnetzteil (2) einen Transformator (4) zur Übertragung elektrischer Leistung von einer Primärseite (6) auf eine Sekundärseite (8) und eine Schalteinheit (10) zum Schalten eines Ansteuerstroms zur Ansteuerung des Transformators (4) aufweist, wobei die Schaltungsanordnung (1) aufweist:
- eine Lastmesseinheit zur Messung einer zu einem durch eine Last (16) auf der Sekundärseite (8) fließenden Laststrom (I_{L}) proportionalen Spannung als Lastmessgröße.
- eine Schwellwerteinheit (24) mit einem Messeingang (26) zum Eingeben der Lastmessgröße und einem Referenzeingang (28) zum Eingeben einer zu einem Schwellwert korrespondierenden Referenzspannung als Referenzgröße zur Prüfung ob die gemessene Lastmessgröße den Schwellwert überschreitet und einem Begrenzungssignalausgang (34) zum Ausgeben eines Begrenzungssignals an die Schalteinheit (10), wenn die Messgröße den Schwellwert überschreitet, und **gekennzeichnet durch**
- eine Referenzveränderungseinheit zum Verändern der Referenzgröße am Referenzeingang (28) der Schwellwerteinheit (24), mit wenigstens einem Veränderungsmittel zum Bewirken der Veränderung der Referenzgröße und einer Steuereinheit zum Ansteuern des Veränderungsmittels.

2. Schaltungsanordnung (1) nach Anspruch 1, **dadurch gekennzeichnet, dass** der Referenzeingang (28) über einen Referenzwiderstand (32) mit einem Referenzspannungspotential (30) und über wenigstens einen Teilerwiderstand (42) mit der Referenzveränderungseinheit verbunden ist, so dass der Referenzwiderstand (32) und der wenigstens eine Teilerwiderstand (42) einen Spannungsteiler bilden, so dass an dem Referenzeingang (28) eine Referenzspannung abhängig von dem Widerstandsverhältnis des Spannungsteilers resultiert.

3. Schaltungsanordnung (1) nach Anspruch 2, **dadurch gekennzeichnet, dass** wenigstens zwei Teilerwiderstände und wenigstens zwei Schaltmittel (52) vorgesehen sind, zum Verändern einer Verschaltung der Widerstände, zum Ändern eines für den Spannungsteiler wirksamen Gesamtteilerwiderstandswertes der Teilerwiderstände.

4. Schaltungsanordnung (1) nach Anspruch 3, **dadurch gekennzeichnet, dass** die Teilenwiderstände parallel zu einander angeordnet sind und zu jedem Tellerwiderstand (42) ein Schaltmittel (52) vorgesehen ist, zum wahlweisen verbinden des jeweiligen Widerstandes mit einem gemeinsamen Bezugspotential, um durch das Schließen eines oder mehrerer der Schaltmittel (52) die betreffenden Teilerwiderstände zueinander parallel zu schalten, um dadurch den wirksamen Gesamtteilerwiderstandswert einzustellen.

5. Schaltungsanordnung (1) nach Anspruch 3, **dadurch gekennzeichnet, dass** die Teilerwiderstände in Reihe zu einander angeordnet sind und jedem Teilerwiderstand (42) ein Schaltmittel (52) parallel geschaltet ist, zum wahlweisen Überbrücken des betreffenden Teilerwiderstandes (42) um dadurch den wirksamen Gesamtteilerwiderstandswert der Reihenschaltung einzustellen.

6. Schaltungsanordnung (1) nach einem der vorstehenden Ansprüche, **dadurch gekennzeichnet, dass** die Referenzveränderungseinheit einen Steuersignaleingang (50) zum Eingeben eines Steuersignals aufweist und dazu vorbereitet ist. abhängig von dem Steuersignal die Referenzgröße für wenigstens eine erste vorbestimmte Zeit auf einen ersten vorbestimmten Wert zu ändern.

7. Schaltungsanordnung (1) nach Anspruch 6, **dadurch gekennzeichnet, dass** die Referenzveränderungseinheit (36) dazu vorbereitet ist, nach Ablauf der ersten vorbestimmten Zeit die Referenzgröße dem Betrag nach für wenigstens eine weitere vorbestimmte Zeit auf einen weiteren vorbestimmten Wert zu ändern.

8. Schaltungsanordnung (1) nach Anspruch 6 oder 7, **dadurch gekennzeichnet, dass** der Begrenzungssignalausgang (34) mit dem Steuersignaleingang (50) verbunden ist, um das Begrenzungssignal als Steuersignal zu verwenden.

9. Schaltungsanordnung (1) nach einem der vorstehenden Ansprüche, **dadurch gekennzeichnet, dass** die Steuereinheit (48) programmierbar ist, insbesondere einen Mikroprozessor aufweist und/oder ein vorgegebenes Programm aufweist, insbesondere gespeichert hat, um die Referenzgröße gemäß einer durch das Programm vorgegebenen Kennlinie zu ändern.

10. Schaltungsanordnung (1) nach einem der vorstehenden Ansprüche, **dadurch gekennzeichnet, dass** die Referenzveränderungseinheit (36) dazu vorbereitet ist, nach einem Verändern der Referenzgröße für eine vorbestimmte Erholungszeit ein erneutes Verändern zu verhindern.

11. Schaltnetzteil (2) mit einer Schaltungsanordnung (1) nach einem der vorstehenden Ansprüche.

12. Verfahren zum Ansteuern eines Schaltnetzteils (2), zum Begrenzen einer Leistungsübertragung des Schaltnetzteils (2), unter Verwendung einer Schaltungsanordnung (1) nach einem der Ansprüche 1 -10, wobei das Schaltnetzteil (2) einen Transformator (4) zur Übertragung elektrischer Leistung von einer Primärseite (6) auf eine Sekundärseite (8) und eine Schalteinheit (10) zum Schalten eines Ansteuerstroms zur Ansteuerung des Transformators (4) aufweist, umfassend die Schritte:
- Messen einer zu einem durch eine Last (16) auf der Sekundärseite (8) fließenden Laststrom (I_{L}) proportionalen Spannung als Lastmessgröße, **gekennzeichnet durch** die Schritte
- Prüfen ob die Lastmessgröße einen **durch** eine Referenzgröße vorgegebenen Schwellwert übersteigt und Ausgeben eines entsprechenden Überlastsignals an die Schalteinheit (10), und
- Verändern der Referenzgröße für wenigstens eine vorbestimmte Zeit auf wenigstens einen geänderten Referenzgrößenwert.

13. Verfahren nach Anspruch 12, **dadurch gekennzeichnet, dass** das Verändern der Referenzgröße durch das Überlastsignal ausgelöst wird.

14. Verfahren nach einem der Ansprüche 12 oder 13, **dadurch gekennzeichnet, dass** zum Verändern der Referenzgröße Widerstände eines bzw. des Spannungsteilers so mittels Schaltmittel (62) geschaltet werden, dass sich das Teilungsverhältnis des Spannungsteilers ändert.

15. Verfahren nach einem der Ansprüche 11-14, **dadurch gekennzeichnet, dass** die Referenzgröße zeitlich aufeinander folgend mehrfach geändert wird.

16. Verfahren nach einem der Ansprüche 11 -15, **dadurch gekennzeichnet, dass** die Veränderung der Referenzgrößen und/oder die nötigen Änderungsschritte vorprogrammiert sind, insbesondere als Daten in einem Datenspeicher in einer bzw. der Referenzveränderungseinheit (36) gespeichert sind.

## Claims

1. Circuit arrangement (1) for controlling a switched mode power supply (2), for limiting a load current (I_{L}) of the switched mode power supply (2), the switched mode power supply (2) comprising a transformer (4) for transmitting electric power from a primary side (6) to a secondary side (8) and a switching unit (10) for switching a control current for controlling the transformer (4), the circuit arrangement (1) comprising:
- a load measuring unit for measuring a voltage proportional to a load current (I_{L}) flowing through a load (16) on the secondary side (8), as a load measurement quantity,
- a threshold value unit (24) having a measuring input (26) for inputting the load measurement quantity and a reference input (28) for inputting a reference voltage corresponding to a threshold value, as a reference quantity for checking whether the measured load measurement quantity exceeds the threshold value, and having a limiting signal output (34) for outputting a limiting signal to the switching unit (10) if the measurement quantity exceeds the threshold value, and **characterised by**
- a reference changing unit for changing the reference quantity at the reference input (28) of the threshold value unit (24), having at least one changing means for effecting the changing of the reference quantity and a control unit for controlling the changing means.

2. Circuit arrangement (1) according to Claim 1, **characterised in that** the reference input (28) is connected via a reference resistor (32) to a reference voltage potential (30) and via at least one divider resistor (42) to the reference changing unit, so that the reference resistor (32) and the at least one divider resistor (42) form a voltage divider, so that a reference voltage dependent on the resistance ratio of the voltage divider results at the reference input (28).

3. Circuit arrangement (1) according to Claim 2, **characterised in that** at least two divider resistors and at least two switching means (52) are provided, for changing a connection of the resistors, in order to change a total divider resistance value, effective for the voltage divider, of the divider resistors.

4. Circuit arrangement (1) according to Claim 3, **characterised in that** the divider resistors are arranged in parallel with respect to one another, and for each divider resistor (42) there is provided a switching means (52), for selectively connecting the respective resistor to a common reference potential, in order to connect the divider resistors concerned in parallel with respect to one another by closing one or more of the switching means (52), in order to thereby adjust the effective total divider resistance value.

5. Circuit arrangement (1) according to Claim 3, **characterised in that** the divider resistors are arranged in series with respect to one another and a switching means (52) is connected in parallel to each divider resistor (42), for selectively bridging the divider resistor (42) concerned, in order to thereby adjust the effective total divider resistance value of the series circuit.

6. Circuit arrangement (1) according to one of the preceding claims, **characterised in that** the reference changing unit comprises a control signal input (50) for inputting a control signal and is configured so as to change, in dependence on the control signal, the reference quantity for at least one first predetermined time to a first predetermined value.

7. Circuit arrangement (1) according to Claim 6, **characterised in that** the reference changing unit (36) is configured so as to change, after expiry of the first predetermined time, the reference quantity in terms of absolute value for at least a further predetermined time to a further predetermined value.

8. Circuit arrangement (1) according to Claim 6 or 7, **characterised in that** the limiting signal output (34) is connected to the control signal input (50), in order to use the limiting signal as a control signal.

9. Circuit arrangement (1) according to one of the preceding claims, **characterised in that** the control unit (48) is programmable, in particular comprises a microprocessor and/or comprises, in particular has stored, a preset program, in order to change the reference quantity in accordance with a characteristic curve preset by the program.

10. Circuit arrangement (1) according to one of the preceding claims, **characterised in that** the reference changing unit (36) is configured so that, for a predetermined recovery time after the reference quantity has been changed, renewed changing is prevented.

11. Switched mode power supply (2) having a circuit arrangement (1) according to one of the preceding claims.

12. Method for controlling a switched mode power supply (2), for limiting a power transmission of the switched mode power supply (2), using a circuit arrangement (1) according to one of Claims 1-10, the switched mode power supply (2) comprising a transformer (4) for transmitting electric power from a primary side (6) to a secondary side (8) and a switching unit (10) for switching a control current for controlling the transformer (4), comprising the steps:
- measuring a voltage proportional to a load current (I_{L}) flowing through a load (16) on the secondary side (8), as a load measurement quantity, **characterised by** the steps of
- checking whether the load measurement quantity exceeds a threshold value preset by a reference quantity, and outputting a corresponding overload signal to the switching unit (10), and
- changing the reference quantity for at least a predetermined time to at least one changed reference quantity value.

13. Method according to Claim 12, **characterised in that** the changing of the reference quantity is triggered by the overload signal.

14. Method according to one of Claims 12 or 13, **characterised in that**, in order to change the reference quantity, resistors of one or the voltage divider are connected by means of switching means (52) such that the division ratio of the voltage divider changes.

15. Method according to one of Claims 11 - 14, **characterised in that** the reference quantity is changed a plurality of times in succession.

16. Method according to one of Claims 11 - 15, **characterised in that** the changing of the reference quantities and/or the necessary changing steps are preprogrammed, in particular are stored as data in a data store in a or the reference changing unit (36).

## Revendications

1. Circuiterie (1) servant à commander un convertisseur (2) de puissance, afin de limiter un courant (I_{L}) de charge du convertisseur (2) de puissance, le convertisseur (2) de puissance présentant un transformateur (4) servant à transmettre la puissance électrique d'un côté primaire (6) à un côté secondaire (8) et une unité (10) de commutation servant à commuter un courant de commande pour la commande du transformateur (4), la circuiterie (1) comprenant :
- une unité de mesure de charge servant à mesurer, comme grandeur de mesure de charge, une tension proportionnelle à un courant (I_{L}) de charge circulant dans une charge (16) du côté secondaire (8),
- une unité (24) à valeur seuil comportant une entrée (26) de mesure servant à entrer la grandeur de mesure de charge, une entrée (28) de référence servant à entrer, comme grandeur de référence, une tension de référence correspondant à une valeur seuil afin de vérifier si la grandeur de mesure de charge mesurée dépasse la valeur seuil, et comportant une sortie (34) de signal de limitation servant à émettre un signal de limitation vers l'unité (10) de commutation, si la grandeur de mesure dépasse la valeur seuil, et **caractérisé par**
- une unité de changement de référence servant à modifier la grandeur de référence à l'entrée (28) de référence de l'unité (24) à valeur seuil par au moins un moyen de changement servant à effectuer la modification de la grandeur de référence et une unité de commande servant à commander le moyen de changement.

2. Circuiterie (1) selon la revendication 1 **caractérisée en ce que** l'entrée (28) de référence est reliée à un potentiel (30) de tension de référence via une résistance (32) de référence et à l'unité de changement de référence via au moins une résistance (42) de division de tension, de telle sorte que la résistance (32) de référence et l'au moins une résistance (42) de division de tension forment un diviseur de tension, de telle sorte qu'une tension de référence apparaît à l'entrée (28) de référence en fonction du rapport de magnétorésistance.

3. Circuiterie (1) selon la revendication 2 **caractérisée en ce qu'**au moins deux résistances de division de tension et au moins deux moyens (52) de commutation sont prévus, pour la modification d'une interconnexion des résistances, afin de changer une valeur de résistance de division de tension globale des résistances de division de tension, agissant sur le diviseur de tension.

4. Circuiterie (1) selon la revendication 3 **caractérisée en ce que** les résistances de division de tension sont disposées en parallèle les unes par rapport aux autres, et un moyen (52) de commutation est prévu pour chaque résistance (42) de division de tension pour la connexion au choix de la résistance respective à un potentiel de référence commun, afin de commuter les résistances de division de tension concernées en parallèle par la fermeture d'un ou de plusieurs moyens (52) de commutation et de régler par ce faire la valeur de résistance de division de tension globale active.

5. Circuiterie (1) selon la revendication 3 **caractérisée en ce que** les résistances de division de tension sont disposées en série et un moyen (52) de commutation est monté parallèlement à chaque résistance (42) de division de tension, afin de shunter au choix la résistance (42) de division de tension concernée et régler par ce faire la valeur de résistance de division de tension globale active du circuit en série.

6. Circuiterie (1) selon l'une des revendications précédentes **caractérisée en ce que** l'unité de changement de référence présente une entrée (50) de signal de commande servant à entrer un signal de commande et est conçue pour changer la grandeur de référence en une première valeur prédéterminée pendant au moins une première durée prédéterminée en fonction du signal de commande.

7. Circuiterie (1) selon la revendication 6 **caractérisée en ce que** l'unité (36) de changement de référence est conçue pour changer la grandeur de référence du point de vue de la somme en une autre valeur prédéterminée, pendant au moins une autre durée prédéterminée, après l'expiration de la première durée prédéterminée.

8. Circuiterie (1) selon la revendication 6 ou 7, **caractérisée en ce que** la sortie (34) de signal de limitation est reliée à l'entrée (50) de signal de commande pour utiliser le signal de limitation comme signal de commande.

9. Circuiterie (1) selon l'une des revendications précédentes, **caractérisée en ce que** l'unité (48) de commande est programmable, présente notamment un microprocesseur et/ou présente un programme prédéfini, et l'a enregistré, afin de modifier la grandeur de référence suivant une courbe caractéristique prédéfinie par le programme.

10. Circuiterie (1) selon l'une des revendications précédentes, **caractérisée en ce que** l'unité (36) de changement de référence est conçue pour empêcher une autre modification de la grandeur de référence après une modification de celle-ci pendant un temps de rétablissement prédéfini.

11. Convertisseur (2) de puissance avec une circuiterie (1) selon l'une des revendications précédentes.

12. Procédé de commande d'un convertisseur (2) de puissance, pour la limitation d'une transmission de puissance du convertisseur (2) de puissance, en utilisant une circuiterie (1) selon l'une des revendications 1 à 10, le convertisseur de puissance présentant un transformateur (4) servant à transmettre la puissance électrique d'un côté primaire (6) à un côté secondaire (8) et une unité (10) de commutation servant à commuter un courant de commande pour la commande du transformateur (4), comprenant les étapes :
- mesurer, comme grandeur de mesure de charge, une tension proportionnelle à un courant (I_{L}) de charge circulant dans une charge (16) du côté secondaire, **caractérisé par** les étapes :
- vérifier si la grandeur de mesure de charge dépasse une valeur seuil prédéfinie par une grandeur de référence et émettre un signal de surcharge correspondant vers l'unité (10) de commutation, et
- changer la grandeur de référence pendant au moins une période prédéterminée en une valeur de grandeur de référence modifiée.

13. Procédé selon la revendication 12, **caractérisé en ce que** la modification de la grandeur de référence est déclenchée par le signal de surcharge.

14. Procédé selon l'une des revendications 12 ou 13, **caractérisé en ce qu'**afin de modifier la grandeur de référence, des résistances d'un ou du diviseur de tension sont commutées à l'aide de moyens (52) de commutation de telle sorte que le rapport de division du diviseur de tension change.

15. Procédé selon l'une des revendications 11-14, **caractérisé en ce que** la grandeur de référence est modifiée plusieurs fois successivement.

16. Procédé selon l'une des revendications 11-15, **caractérisé en ce que** la modification des grandeurs de référence et/ou les étapes de modification requises sont préprogrammées, et sont notamment enregistrées sous forme de données dans une mémoire de données d'une ou de l'unité (36) de changement de référence.
